# NEUE EUROPÄISCHE PATENTSCHRIFT

(11) **EP 2 139 679 B2**
(45) Veröffentlichungstag und Bekanntmachung des Hinweises auf die Entscheidung über den Einspruch: **31.05.2017**
(45) Hinweis auf die Patenterteilung: 01.01.2014
(21) Anmeldenummer: 08707235.1
(22) Anmeldetag: 24.01.2008
(51) Int. Cl.: B32B 29/06, D21H 27/18

(54) **VERFAHREN ZUM HERSTELLEN EINES FLÄCHIGEN BEDRUCKBAREN HALBZEUGS FÜR EIN FLÄCHIGES BAUTEIL, INSBESONDERE FÜR BODEN-, WAND-, DECKEN- UND/ODER MÖBELANWENDUNGEN**
METHOD FOR THE PRODUCTION OF A PLANAR, PRINTABLE SEMIFINISHED PRODUCT FOR A PLANAR BUILDING COMPONENT, PARTICULARLY FOR FLOOR, WALL, CEILING, AND/OR FURNITURE USES
PROCÉDÉ DE PRODUCTION D'UN SEMI-PRODUIT PLAN, IMPRIMABLE, POUR UN COMPOSANT PLAN, NOTAMMENT POUR UTILISATION SUR LES SOLS, LES MURS, LES PLAFONDS ET/OU LES MEUBLES

(30) Priorität: 25.04.2007 DE 102007019851
(43) Veröffentlichungstag der Anmeldung: 06.01.2010
(60) Teilanmeldung: 12194807.9
(73) Patentinhaber: Hülsta-Werke Hüls GmbH & CO. KG, 48703 Stadtlohn (DE); Flooring Industries Limited, SARL, 8070 Bertrange (LU)
(72) Erfinder: TÜNTE, Udo, 46348 Raesfeld (DE); SCHWITTE, Richard, 48172 Gescher (DE); PETERSEN, Frank, 48653 Coesfeld (DE)
(74) Vertreter: Von Rohr Patentanwälte Partnerschaft mbB
(86) Internationale Anmeldenummer: PCT/EP2008/000524
(87) Internationale Veröffentlichungsnummer: WO 2008/131811

(56) Entgegenhaltungen:
- EP-A- 0 046 460
- EP-A- 1 072 398
- EP-A- 1 749 676
- EP-A1- 0 870 872
- EP-A1- 1 072 398
- EP-A1- 1 749 676
- DE-A1- 1 022 050
- DE-A1- 2 926 983
- US-A1- 2002 025 426

## Beschreibung

Die Erfindung betrifft ein Verfahren zum Herstellen eines flächigen, bedruckbaren Halbzeugs für ein flächiges Bauteil, insbesondere für Boden-, Wand-, Decken- und/oder Möbelanwendungen, nach dem Oberbegriff des Anspruchs 1.

Aus der EP-A-0046460 ist bereits ein Formteil und ein Verfahren zur Herstellung eines Formteils bekannt. Das Formteil weist einen Grundkörper auf, auf dessen Außenseiten beidseitig jeweils eine haftvermittelnde Glasfaserschicht und eine äußere dekorative Papierschicht vorgesehen ist, wobei die dekorative Papierschicht mit einem Harz imprägniert ist.

Aus der US 2002/025426 A1 ist bereits ein Verfahren zur Herstellung eines mit einem Dekor versehenen Paneels bekannt, bei dem auf einen Grundkörper ein Dekorpapier aufgebracht wird, das unter- und oberseitig beharzt ist.

Ein Verfahren zum Herstellen eines bedruckbaren Halbzeugs für ein flächiges Bauteil ist bereits aus der EP 1 749 676 A1 bekannt. Diese Druckschrift betrifft konkret ein Verfahren und eine Vorrichtung zum Herstellen einer mittels eines Tintenstrahldruckverfahrens bedruckbaren Papierbahn sowie einen mittels dieses Verfahrens bedruckbaren Gegenstand. Bei dem Gegenstand kann es sich um Tafeln oder Platten handeln. Bei der EP 1749 676 A1 geht es darum, ein Tintenstrahldruckverfahren zur Verfügung zu stellen, wobei das Druckergebnis auf der Oberfläche der zu bedruckenden Gegenstände hinsichtlich des Aussehens höchsten Qualitätsanforderungen entspricht. Hierzu ist im Stand der Technik vorgesehen, dass eine längs ihrer gesamten Dicke für flüssiges Kunstharz saugfähige Papierbahn von einer Seite her derart mit flüssigem Kunstharz getränkt wird, dass das Kunstharz die Papierbahn nicht vollständig durchdringt, so dass die andere Seite der Papierbahn zumindest weitgehend frei von Kunstharz ist. Dabei weist die bekannte Papierbahn einen oberseitigen, im wesentlichen harzfreien Bereich auf, der etwa 50 % der Dicke der Papierbahn ausmacht. Durch das bekannte Verfahren sollen Oberflächen geschaffen werden, die hinsichtlich ihrer für das Bedrucken erforderlichen Eigenschaften konventionellen Papieroberflächen entsprechen, die durch die Auswahl des Papiers und der Färbeflüssigkeit optimal an das angestrebte Druckergebnis angepaßt sein sollen.

Die Herstellung des bekannten, teilbeharzten Druckpapiers setzt jedoch einigen apparativen Aufwand beim Druckpapierhersteller voraus, was mit entsprechenden apparativen Kosten verbunden ist. Dementsprechend ist eine kostengünstige Fertigung nur realisierbar, wenn entsprechend große Mengen des Druckpapiers hergestellt werden. Problematisch ist im Übrigen, dass es nicht immer einfach ist, zu einer genau vorbestimmten Teilbeharzung des Druckpapiers zu kommen. Unterschiedlich dicke Druckpapiere erfordern zur Erzielung einer bestimmten Teilbeharzung die Einstellung verschiedener Prozeßparameter, was, insbesondere dann, wenn nur geringe Mengen an Druckpapier benötigt werden, schwierig bzw. teuer ist. Problematisch ist in diesem Zusammenhang auch, dass bei einer zu geringen Beharzung des Druckpapiers nicht gewährleistet werden kann, dass bei der anschließenden Verpressung des auf Bögen geschnittenen Druckpapiers mit einem Grundkörper eine vollflächige und dauerhafte Verbindung gegeben ist.

Aufgabe der vorliegenden Erfindung ist es, ein Verfahren der eingangs genannten Art zur Verfügung zu stellen, bei dem Halbzeug in einfacher Weise und kostengünstig hergestellt und auch in nachfolgenden Produktionsschritten in einfacher Weise bearbeitet werden kann.

Zur Lösung der vorgenannten Aufgabe sind bei einem Verfahren der eingangs genannten Art die Merkmale des Anspruchs 1 vorgesehen. Die Verwendung einer beharzten Unterschicht als Underlay hat den Vorteil, dass unabhängig von der Art und Dicke des Druckpapiers in jedem Falle eine sichere Verbindung des Druckpapiers mit dem Grundkörper nach dem Verpressen sichergestellt werden kann. Darüber hinaus bietet die Erfindung den wesentlichen Vorteil, dass zur Herstellung des unbedruckten Halbzeugs ohne weiteres ein unbeharztes Druckpapier verwendet werden kann. Somit kann der apparative Aufwand zur Herstellung eines teilbeharzten Druckpapier grundsätzlich eingespart werden.

In Abhängigkeit des Harzanteils der Unterschicht kann sich nach dem Verpressen der beiden Schichten mit dem Grundkörper eine Durchbeharzung oder auch eine definierte Teilbeharzung der Druckpapierschicht ergeben, wobei der obere Bereich und insbesondere die Oberseite der Druckpapierschicht dann zumindest im wesentlichen harzfrei bleibt. Es versteht sich in diesem Zusammenhang, dass hierfür nicht nur Druck, Zeitdauer und Temperatur beim Verpressen eine Rolle spielen, sondern auch, wie zuvor angegeben, der Harzanteil der einzelnen Schichten sowie die Viskosität des Harzes und die Saugfähigkeit der Druckpapierschicht und/oder der Unterschicht.

Bei einer vollständigen Durchbeharzung der Druckpapierschicht über ihre gesamte Dicke kann sichergestellt werden, dass die Druckfarbe bzw. Tinte nicht an das Papier der Druckpapierschicht gelangt, so dass grundsätzlich ein etwaig auftretender Löschblatteffekt nicht möglich ist. In jedem Falle ist das Aufbringen der Druckfarbe unmittelbar auf die Oberseite der durchbeharzten Druckpapierschicht ohne weiteres grundsätzlich möglich. Allerdings kann aber auch eine definierte Teilbeharzung der Druckpapierschicht vorgenommen werden, um sehr gute Druckergebnisse zu erzielen. Hinzuweisen ist im Zusammenhang mit der Teilbeharzung darauf, dass zwischen der Oberseite der Druckpapierschicht mit geringem oder ohne Harzanteil und dem unteren Bereich der Druckpapierschicht mit hohem Harzanteil in der Praxis keine exakte Trennlinie vorliegt, da sich bei der Verpressung der einzelnen Schichten mit dem Grundkörper ein Eindringen des Harzes von der Unterschicht in die Druckpapierschicht von unten nach oben ergibt, so dass die höchste Konzentration des Harzes an der Unterseite der Druckpapierschicht und damit am Übergang zur Unterschicht vorliegt. Der Übergang des oberen, im wesentlichen harzfreien Bereiches der Druckpapierschicht zum unteren Bereich der Druckpapierschicht zeichnet sich durch eine erkennbare Änderung des Harz-Konzentrationsgefälles aus.

Besonders eignet sich das erfindungsgemäße Verfahren bei der sogenannten Direktbeschichtung im Kurztaktpreßverfahren. Hierbei schmilzt das Harz unter Druck und Hitze der Preßplatten auf, verbindet die Druckpapierschicht und die Unterschicht mit dem Grundkörper und härtet anschließend unmittelbar aus. Wesentlich beim Kurztaktverfahren ist, dass der Grundkörper als Trägerplatte dem Preßdruck, der in der Regel zwischen 200 und 650 N/cm² liegt, nur unwesentlich nachgeben darf. Darüber hinaus dürfen der Grundkörper und die aufzubringenden Papierschichten beim Ein- und Austrag in die Preßeinrichtung die heißen Preßplatten nicht berühren. Die Temperatur liegt beim Verpressen in der Regel zwischen 80 und 200 °C, bevorzugt zwischen 140 und 200 °C. Die jeweilige Temperatur ist unter anderem abhängig von der Reaktivierungstemperatur des Harzes. Außerdem ist die sogenannte kritische Liegezeit, d. h. die Zeit vom ersten Kontakt der beharzten Schichten mit der Preßplatte bis zum Erreichen des notwendigen Preßdruckes, zu beachten. Diese kritische Liegezeit sollte extrem kurz sein.

Um ein Verlaufen der Tinte auf der Ober- bzw. Druckseite der Druckpapierschicht bei der weiteren Bearbeitung des Halbzeugs in jedem Falle zu vermeiden, bietet es sich an, die Oberseite der Druckpapierschicht vor dem Bedrucken zu glätten, fein zu schleifen und/oder insbesondere fein aufzurauhen. Das Glätten, Schleifen und/oder Aufrauhen kann beispielsweise durch spezielle Rakel oder Kalander erfolgen.

Zur Erzielung eines guten Druckergebnisses kann es sich alternativ zum Aufrauhen, Schleifen und/oder Glätten der Oberseite der Druckpapierschicht oder auch ergänzend dazu anbieten, auf der Oberseite der Druckpapierschicht, unabhängig davon, ob diese durchbeharzt oder teilbeharzt ist, eine Farbaufnahmeschicht vorzusehen, die zum Aufbringen und als Träger einer Farbschicht vorgesehen ist. Eine solche Farbaufnahmeschicht stellt sicher, dass es nicht zu einem unbeabsichtigten Verlaufen der Druckfarbe auf der Oberseite der Druckpapierschicht kommt.

Ein Halbzeug kann nach seiner industriellen Fertigung in nachfolgenden Verfahrensschritten direkt zu einem flächigen Bauteil der vorgenannten Art weiterverarbeitet oder im unbedruckten Zustand zur späteren Verarbeitung weiterveräußert werden, beispielsweise an Bodenleger oder Druckereien, wo zu einem späteren Zeitpunkt die Bedruckung des Halbzeugs und die Fertigstellung des Bauteils erfolgt.

Wie zuvor ausgeführt worden ist, kann die Druckpapierschicht beim Halbzeug über ihre gesamte Dicke nach dem Verpressen vollständig durchbeharzt sein. Dabei versteht es sich, dass das Material und die Porösität der Druckpapierschicht so gewählt sind, dass eine vollständige Durchdringung dieser Schicht mit Harz auch möglich ist. Alternativ ist es möglich, dass die Druckpapierschicht über ihre Dicke nur teilbeharzt ist, wobei die Oberseite dann zumindest teilweise, vorzugsweise im wesentlichen harzfrei ist. Bevorzugt ist es in diesem Zusammenhang so, dass der obere Bereich der Druckpapierschicht, in dem sich nur ein geringer oder kein Harzanteil befindet, sich über maximal 50 % der Dicke der Druckpapierschicht erstreckt. Vorzugsweise sollte dieser Bereich zwischen 40 % und 5 % der Dicke der Druckpapierschicht liegen, wobei jeder einzelne Wert in dem vorgenannten Intervall möglich ist, auch wenn dieser im einzelnen nicht genannt ist.

Je nach Anwendungszweck sollte das Flächengewicht der Druckpapierschicht und der Unterschicht jeweils ohne Beharzungsanteil zwischen 30 und 300 g/m², vorzugsweise zwischen 50 und 120 g/m², liegen. Das Flächengewicht des Beharzungsanteils sollte vorzugsweise zwischen 5 und 300 g/m², und insbesondere zwischen 20 und 100 g/m², liegen.

Bei dem Harz der Unterschicht handelt es sich insbesondere um ein reaktivierbares Harz, vorzugsweise um ein Aminoplast, wie ein Melamin-Harz. Bevorzugt werden Harze aus der Gruppe der Diallylphtalate, Epoxidharze, Harnstoff-Formaldehyd-Harze, Harnsäure-Acetylsäureester-Copolyester, Melamin-Formaldehyd-Harze, Melamin-Phenol-Formaldehyd-Harze, Phenol-Formaldehyd-Harze, Poly(meth)-acrylate oder ungesättigter Polyester-Harze verwendet.

Wenngleich es grundsätzlich möglich ist, dass die Oberseite der Druckpapierschicht des Halbzeugs unmittelbar zu bedrucken, hat es sich als bevorzugt erwiesen, druckseitig auf der Druckpapierschicht eine separate Farbaufnahmeschicht und insbesondere einen Pigmentstrich vorzusehen. Das Flächengewicht des Pigmentstrichs sollte dabei zwischen 0,5 und 20 g/m² betragen. Bevorzugt weist der Pigmentstrich Weißpigmente, wie Kaolin, Kalziumcarbonat, Aluminiumhydroxid, Talkum, Titandioxid, oder Farbpigmente, wie Eisenoxidpigmente, Ruß, Kupfer, Aluminium, andere Metallpigmente, oder organische Farbpigmente auf. Der Pigmentstrich kann auch Flüssigfarbstoffe und/oder Kieselsäuren und/oder Kieselsole aufweisen. Des weiteren kann der Pigmentstrich natürliche oder synthetische Bindemittel, wie Stärke, Polyvinylalkohol, Carboxymethylzellulose, Polymerdispersionen auf der Basis von Acrylsäure, Acrylester, Styrol, Butadien, Vinylacetat oder Acrylnitril enthalten. Das Verhältnis von Pigment zu Bindemittel im Pigmentstrich liegt bevorzugt zwischen 1:0,05 bis 1:1 und insbesondere 1:0,08 bis 1:0,35, bezogen auf den Feststoffgehalt.

Die vorliegende Erfindung bezieht sich weiterhin auf ein Verfahren zum Herstellen eines flächigen bedruckten Bauteils der vorgenannten Art unter Verwendung eines zuvor beschriebenen Halbzeugs, wobei die Druckpapierschicht erst nach dem Aufpressen bedruckt wird. Dieses Bedrucken kann, wie zuvor beschrieben, unmittelbar im Anschluß an die Herstellung des Halbzeugs erfolgen, oder aber bedarfsweise auch erst zu einem späteren Zeitpunkt. Die Produktionslinie kann also hier durch eine Zwischenlagerung oder einen Vertrieb des Halbzeugs unterbrochen sein.

Die Bedruckung des Halbzeugs kann grundsätzlich mit allen bekannten Druckverfahren erfolgen. Bevorzugt erfolgt die Bedruckung der Druckpapierschicht mittels eines digitalen Druckverfahrens, insbesondere eines Tintenstrahldruckverfahrens. Hierbei kommen dann vorzugsweise sogenannte Inkjet-Digitaldrucker, insbesondere Flachdrucker, zum Einsatz, mit denen sich hervorragende Druckergebnisse erzielen lassen.

Zur Bedruckung werden als Druckfarben bevorzugt lösemittelhaltige und/oder wasserhaltige Tinten verwendet. Grundsätzlich können auch UV-basierende Farbsysteme verwendet werden, wenngleich diese den Nachteil einer Geruchsentwicklung haben.

Jedenfalls sollte die Farbschicht bzw. die Druckfarbe unmittelbar entweder auf die Farbaufnahmeschicht oder, sofern diese nicht vorhanden ist, unmittelbar auf die Oberseite der Druckpapierschicht aufgebracht werden.

Um die Gefahr des Verlaufens der aufgebrachten Druckfarbe zu verringern, hat es sich im Übrigen als günstig erwiesen, dass eine auf die Druckpapierschicht aufgebrachte Farbschicht während und/oder nach dem Bedrucken getrocknet wird und/oder dass die Druckpapierschicht vor dem Bedrucken über Umgebungstemperatur erwärmt wird. Hierzu können entsprechende der Preßeinrichtung verfahrensmäßig nachgeschaltete Heizeinrichtungen vorgesehen sein, die die Druckpapierschicht und insbesondere die Oberseite der Druckpapierschicht beheizen bzw. erwärmen. Dies kann beispielsweise über entsprechende Gebläse erfolgen. Statt dessen oder auch zusätzlich können Infrarot-, und insbesondere NIR-Heizeinrichtungen, und/oder Mikrowellenheizeinrichtungen vorgesehen sein, die unmittelbar auf den Wasseranteil in der Farbschicht wirken. Die Beheizung bzw. Trocknung kann vor, während und/oder nach dem Bedrucken erfolgen. Hier können ein oder mehrere Heizgeräte vorgesehen sein, wobei die Trocknungsstrecke nicht nur punktuell vorgesehen sein, sondern sich auch über einen größeren Bereich erstrecken kann, beispielsweise zwischen 0 bis 5 m, und insbesondere zwischen 2 und 3 m. Die Temperatur beim Heizen bzw. Trocknen ist abhängig von der Reaktivierungstemperatur des Harzes und liegt unterhalb dieser Temperatur. Üblicherweise liegt die Heiztemperatur zwischen 40 °C und 150 °C. Die vorgenannte Beheizung bzw. Erwärmung führt zu einer Trocknung der Tinte unmittelbar auf der Druckpapierschicht oder aber auf der Tintenaufnahmeschicht, sobald die Druckfarbe vom Druckkopf abgegeben und aufgebracht ist.

Zum Schutz der aufgebrachten Farbschicht bietet es sich an, auf diese nach dem Bedrucken eine Schutzschicht aufzubringen. Diese Schutzschicht kann entweder auflackiert oder aber insbesondere im Kurztaktpreßverfahren aufgepreßt werden, wie dies zuvor bereits beschrieben worden ist.

Es wird ausdrücklich darauf hingewiesen, dass die vorgenannten und nachstehenden Bereichsangaben und Intervalle sämtliche innerhalb der Bereichsangaben und Intervalle liegende Einzelwerte und Zwischenintervalle bzw. Zwischenbereichsangaben umfassen, ohne dass es einer ausdrücklichen Erwähnung von Einzelwerten bzw. Zwischenintervallen oder Zwischenbereichsangaben bedarf.

Nachfolgend werden Ausführungsbeispiele der Erfindung anhand der Zeichnung näher beschrieben.

Es zeigt
- Fig. 1: eine schematische Querschnittsansicht einzelner Schichten eines Halbzeugs im unverpreßten Zustand,
- Fig. 2: eine der Fig. 1 entsprechende Ansicht einer anderen Ausführungsform eines Halbzeugs,
- Fig. 3: eine der Fig. 1 entsprechende Ansicht einer weiteren Ausführungsform eines nicht erfindungsgemäßen Halbzeugs,
- Fig. 4: eine schematische Querschnittsansicht eines Teils eines verpreßten Halbzeugs und
- Fig. 5: eine schematische Querschnittsansicht eines Teils eines flächigen Bauteils.

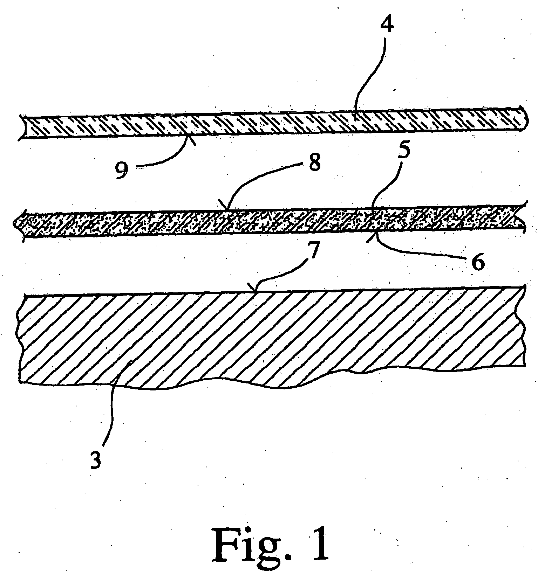

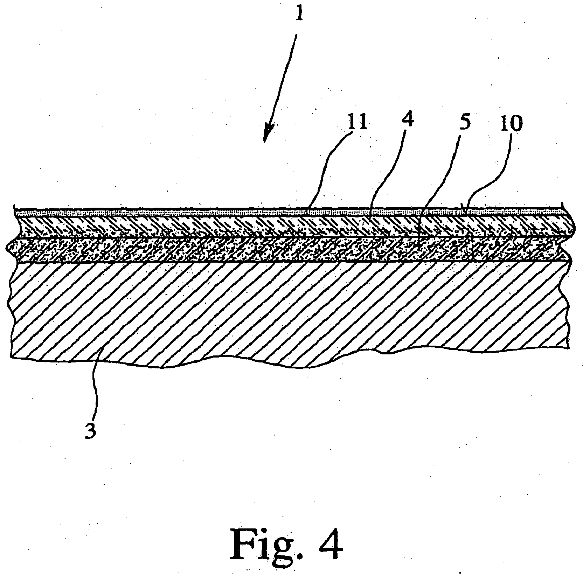

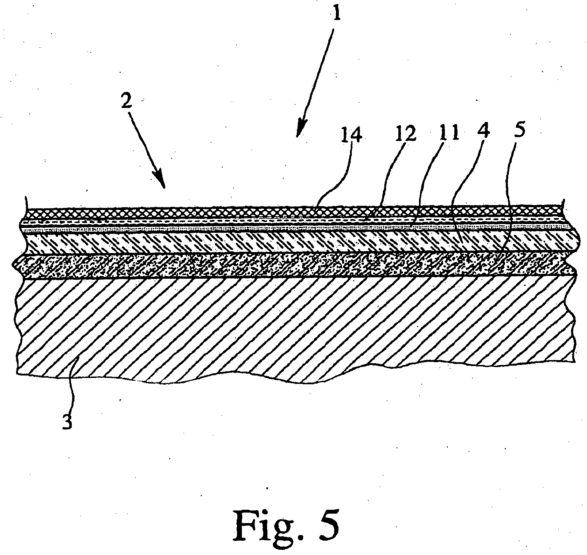

In den Fig. 1 bis 3 sind einzelne Schichten eines flächigen Halbzeugs 1 im unverpreßten Zustand, das in Fig. 4 im verpreßten Zustand dargestellt ist, gezeigt. Das Halbzeug 1 als solches ist zur Herstellung eines flächigen Bauteils 2 vorgesehen, wie dies in Fig. 5 dargestellt ist. Das Bauteil 2 ist grundsätzlich für Boden-, Wand-, Decken- und/oder Möbelanwendungen geeignet und vorgesehen. Dementsprechend kann es sich bei dem Bauteil 2 um eine Platte oder ein Panel oder auch um ein sonstiges Boden-, Wand- und/oder Deckenbelagselement oder aber um ein plattenförmiges Möbelelement handeln.

Das Halbzeug 1 weist einen flächigen Grundkörper 3 auf, der nur ausschnittsweise dargestellt ist. Der Grundkörper 3 ist ein- oder mehrlagig bzw. -schichtig aufgebaut und besteht insbesondere aus Holz- und/oder Kunststoffwerkstoffen. Insbesondere kann es sich bei dem Grundkörper 3 um eine Holzwerkstoffplatte, wie MDF-, HDF- oder DKS-Platte oder um eine sogenannte HPL(High Pressure Laminate)-Platte handeln. Grundsätzlich kann es sich bei dem Grundkörper 3 aber auch um dickere Folien, Pappe oder Gipskartonplatten handeln.

Weiterhin weist das Halbzeug 1 eine bedruckbare, vor dem Verbinden mit dem Grundkörper 3 jedoch unbedruckte Druckpapierschicht auf, die, wie sich aus Fig. 4 ergibt, mit dem flächigen Grundkörper 3 fest verbunden ist, nämlich unter Druck- und Hitzeeinfluß verpreßt worden ist. Die Druckpapierschicht 4 besteht aus einem üblichen saug- bzw. flüssigkeitsaufnahmefähigen Papier- bzw. Fasermaterial.

Wesentlich ist nun, dass der Schichtaufbau des Halbzeugs 1 zusätzlich zu dem Grundkörper 3 und der Druckpapierschicht 4 eine separate, beharzte Unterschicht 5 aufweist, die zwischen der Druckpapierschicht 4 und dem Grundkörper 3 angeordnet ist. Die Unterschicht 5, bei der es sich letztlich um eine beharzte Papierschicht handelt, ist zusammen mit der Druckpapierschicht 4 mit dem Grundkörper 3 verpreßt, wie sich dies aus Fig. 4 ergibt. Dabei liegt die Unterschicht 5 mit ihrer Unterseite 6 auf der Oberseite 7 des Grundkörpers 3 auf, während die Oberseite 8 der Unterschicht 5 an der Unterseite 9 der Druckpapierschicht 4 anliegt.

In den Fig. 1 bis 3 ist jeweils eine Unterschicht 5 dargestellt, die durchbeharzt ist. Dabei ist die Harzkonzentration über die Dicke der Unterschicht 5 zumindest im wesentlichen gleich. Grundsätzlich ist es aber auch möglich, dass die Unterschicht nur teilbeharzt ist. Die Teilbeharzung der Unterschicht 5 kann dadurch realisiert sein, dass die Unterschicht 5 lediglich von ihrer Unterseite 6 her oder aber von ihrer Oberseite 8 her beharzt ist. Auch eine beidseitige Beharzung ist möglich, wobei dann der mittlere Bereich der Unterschicht 5 unbeharzt sein kann. Auch ist es möglich, ober- und/oder unterseitig eine besonders hohe Harzkonzentration vorzusehen. Im dargestellten Ausführungsbeispiel mit durchbeharzter Unterschicht 5 beträgt das Flächengewicht der Unterschicht 5 einschließlich des Beharzungsanteils etwa 170 g/m². Dabei liegt das Flächengewicht der Unterschicht 5 ohne Beharzungsanteil bei etwa 90 g/m².

Im in Fig. 1 dargestellten Ausführungsbeispiel ist die Druckpapierschicht 4 im unverpreßten Zustand unbeharzt und unbedruckt. Das Flächengewicht der Druckpapierschicht 4 beträgt dabei etwa 90 g/m².

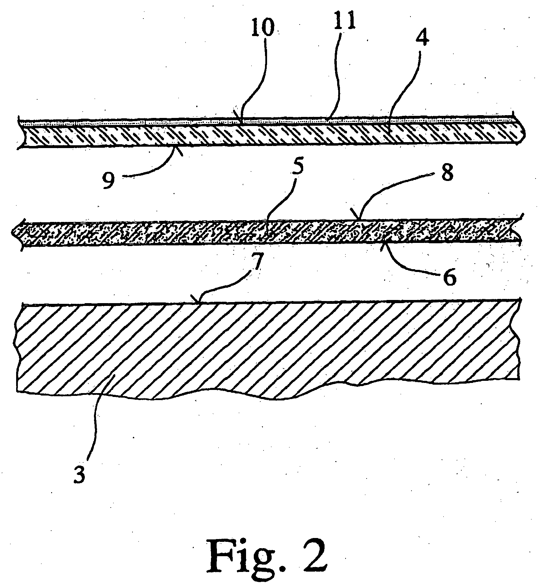

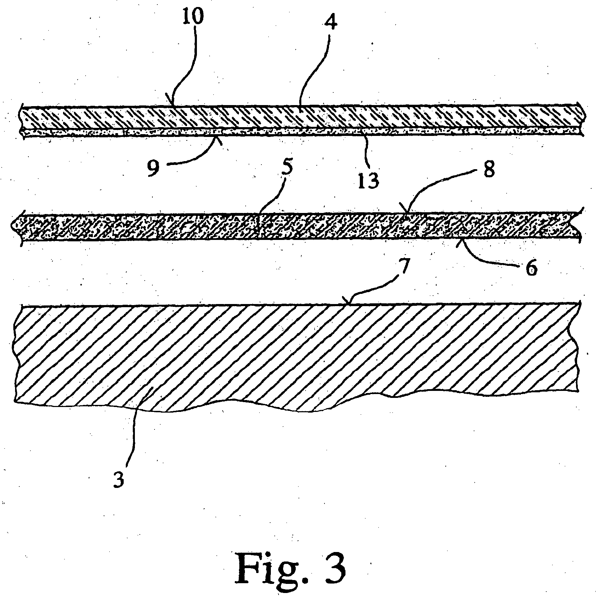

Bei der in Fig. 2 dargestellten Ausführungsform weist die Druckpapierschicht 4 auf ihrer Oberseite 10 eine separate Farbaufnahmeschicht 11 auf. Hierbei handelt es sich um einen Pigmentstrich, der vollflächig auf der gesamten Oberseite 10 der Druckpapierschicht 4 vorgesehen ist und die Oberseite 10 vollständig abdeckt. Die Farbaufnahmeschicht 11 dient zur Vergleichmäßigung der Oberseite 10 der Druckpapierschicht 4, zur Aufnahme von Druckfarbe, zur Fixierung einer Farbschicht 12, wie diese bei dem Bauteil 2 gemäß Fig. 5 vorgesehen ist, und damit letztlich zur Verhinderung des Verlaufens der einzelnen Farben der Farbschicht 12. Die in Fig. 3 dargestellte Ausführungsform entspricht im wesentlichen der Ausführungsform gemäß Fig. 1, wobei jedoch der untere Bereich 13 der Druckpapierschicht 4 teilbeharzt ist. Es versteht sich, dass statt der dargestellten Teilbeharzung auch eine geringere oder stärkere Teilbeharzung bezogen auf die Dicke der Druckpapierschicht 4 möglich ist. Die in Fig. 3 dargestellte Ausführungsform ist nicht Gegenstand der Erfindung.

In Fig. 4 ist ein Halbzeug 1 im verpreßten Zustand dargestellt. Das in Fig. 4 dargestellte Halbzeug 1 weist den in Fig. 2 dargestellten Schichtaufbau auf, wobei erkennbar ist, dass Harz aus der Unterschicht 5 in den unteren Bereich der Druckpapierschicht 4 eingedrungen ist. Hierdurch ergibt sich einerseits eine feste Verbindung der Druckpapierschicht 4 mit der Unterschicht 5 und im Übrigen eine feste Verbindung der beiden Schichten 4, 5 mit dem Grundkörper 3. Im dargestellten Ausführungsbeispiel ist der Harzanteil der Unterschicht 5 so gewählt, dass sich nach dem Verpressen eine Teilbeharzung der Druckpapierschicht 4 ergibt, wobei die Oberseite 10 der Druckpapierschicht 4 zumindest im wesentlichen harzfrei bleibt. Es darf darauf hingewiesen werden, dass es allerdings grundsätzlich auch möglich ist, dass die Druckpapierschicht 4 im verpreßten Zustand vollständig durchbeharzt ist. Dies ist jedenfalls dann unproblematisch, wenn sich auf der Oberseite 10 der Druckpapierschicht die Farbaufnahmeschicht 11 befindet. Im dargestellten Ausführungsbeispiel liegt das Flächengewicht der Farbaufnahmeschicht 11 zwischen 0,5 und 20 g/m². Letztlich ist das Flächengewicht zumindest im wesentlichen von der Art der verwendeten Druckfarbe abhängig.

Bei dem verwendeten Harz der Unterschicht 5 handelt es sich im Übrigen um ein reaktivierbares Harz, insbesondere um Melamin, das beim Erhitzen unter Druck aufschmilzt und anschließend unmittelbar aushärtet.

In Fig. 5 ist ein Bauteil 2 dargestellt, das ausgehend von einem Halbzeug 1 entsprechend Fig. 4 hergestellt worden ist. Hierbei ist auf das Halbzeug 1, d. h. auf die Farbaufnahmeschicht 11, eine Farbschicht 12 aufgebracht. Die Farbschicht 12 ist vorliegend mittels eines nicht dargestellten Inkjet-Digitaldruckers, nämlich eines Flachdruckers, mittels des Tintenstrahldruckverfahrens aufgebracht worden, wenngleich auch andere Druckverfahren grundsätzlich möglich sind. Bei der Druckfarbe kann es sich sowohl um lösemittelhaltige als auch wasserhaltige Tinte handeln.

Auf die Farbschicht 12 aufgebracht ist eine Schutzschicht 14, die vorliegend ebenfalls beharzt ist und zum Schutz der Farbschicht 12 vor UV-Strahlung und insbesondere vor mechanischer Beschädigung dient. Damit die Farbschicht 12 noch erkennbar ist, ist die Schutzschicht 14 transparent. Grundsätzlich können in die Schutzschicht 14 sehr harte Partikel, wie Korund, eingelagert sein. Wird das Bauteil 2 nicht im Bodenbereich eingesetzt, kann entweder auf die Schutzschicht 14 verzichtet werden oder aber diese weist eine geringere Schichtdicke und/oder einen geringeren Anteil von harten Partikeln auf. Bei der Schutzschicht 14 kann es sich auch um eine Lackierung handeln.

Die Herstellung eines Halbzeugs 1 und daraus eines Bauteils 2 erfolgt bevorzugt im Kurztaktpreßverfahren. Hierbei handelt es sich um ein diskontinuierliches Preßverfahren, bei dem die zu verpressenden Teile einer Preßeinrichtung zugeführt werden. Dabei werden über entsprechende Beschickungsstationen die einzelnen zu verpressenden Schichten zusammengeführt. Vorliegend wird auf einen beispielsweise rechteckigen Grundkörper 3 zunächst die Unterschicht 5 und anschließend die Druckpapierschicht 4 aufgelegt. Nach entsprechender Ausrichtung der einzelnen Schichten zueinander wird die gesamte Einheit im nicht verpreßten Zustand der Presse zugeführt. Dort wird der gesamte Verbund verpreßt, wobei unter dem Druck und der Temperatur der Preßplatten das reaktive Harz aufschmilzt und anschließend direkt aushärtet. Dabei ergibt sich ein fester Schichtenverbund. Nach der Verpressung wird das fertige Halbzeug 1 von der Preßeinrichtung abgeführt. Es kann anschließend direkt zum Bauteil 2 weiterverarbeitet oder aber im unbedruckten Zustand vertrieben werden. Gegebenenfalls ist ein Zuschneiden auf ein kleineres Maß notwendig.

Zum Herstellen des Bauteils 2 wird das Halbzeug 1 über einen Flachdrucker im digitalen Druckverfahren bedruckt. Hierzu wird die Farbschicht 12 auf die Farbaufnahmeschicht 11 aufgebracht. Vor dem Drucken kann die Farbaufnahmeschicht 11 erwärmt werden. Während und nach dem Drucken erfolgt im Übrigen eine Trocknung der aufgebrachten Druckfarbe unterhalb der Reaktivierungstemperatur des verwendeten Harzes. Hieran schließt sich die abschließende Verpressung der beharzten Schutzschicht 14 erneut im Kurztaktpreßverfahren an, um die Schutzschicht 10 nach Schmelzen und Aushärten des Harzes mit der Druckpapierschicht 4 zu verbinden.

Nach dem Aufbringen der Schutzschicht ist das Bauteil 2 als solches fertiggestellt und kann anschließend bedarfsweise auf kleinere Maße zugeschnitten oder in eine Mehrzahl kleinerer Bauteile geschnitten werden.

### Bezugszeichenliste

- 1: Halbzeug
- 2: Bauteil
- 3: Grundkörper
- 4: Druckpapierschicht
- 5: Unterschicht
- 6: Unterseite
- 7: Oberseite
- 8: Oberseite
- 9: Unterseite
- 10: Oberseite
- 11: Farbaufnahmeschicht
- 12: Farbschicht
- 13: Unterer Bereich
- 14: Schutzschicht

## Patentansprüche

1. Verfahren zum Herstellen eines flächigen, bedruckbaren Halbzeugs (1) für ein flächiges Bauteil (2), insbesondere für Boden-, Wand-, Decken- und/oder Möbelanwendungen, wobei eine bedruckbare Druckpapierschicht (4) mit einem flächigen Grundkörper (3) unter Druck- und Hitzeeinfluss verpreßt wird, wobei vor dem Verpressen eine beharzte Unterschicht (5) auf dem Grundkörper (3) angeordnet wird, die sich zwischen dem Grundkörper (3) und der Druckpapierschicht (4) befindet und wobei die Unterschicht (5) zusammen mit der Druckpapierschicht (4) mit dem Grundkörper (3) verpresst wird,
**dadurch gekennzeichnet,**
**dass** die Druckpapierschicht (4) unbedruckt und unbeharzt ist und dass die Unterschicht (5) als durch- oder teilbeharzte Papierschicht ausgebildet ist.

2. Verfahren nach Anspruch 1, **dadurch gekennzeichnet, dass** der Harzanteil der Unterschicht (5) derart gewählt ist, dass sich nach dem Verpressen eine Durchbeharzung oder eine definierte Teilbeharzung der Druckpapierschicht (4) ergibt, wobei die Oberseite (10) der Druckpapierschicht (4) zumindest im wesentlichen harzfrei bleibt.

3. Verfahren nach Anspruch 1 oder 2, **dadurch gekennzeichnet, dass** eine solche Druckpapierschicht (4) verwendet wird, auf deren Oberseite (10) eine separate, auf der Papierschicht (4) aufliegende Farbaufnahmeschicht (11) vorgesehen ist, die als Träger einer Farbschicht (12) dient.

4. Verfahren nach einem der vorhergehenden Ansprüche, **dadurch gekennzeichnet, dass** die Oberseite (10) der Druckpapierschicht (4) nach dem Verpressen und vor dem Bedrucken mechanisch geglättet, geschliffen und/oder insbesondere fein aufgerauht wird.

5. Verfahren zum Herstellen eines flächigen bedruckten Bauteils (2), insbesondere für Boden-, Wand-, Decken- und/oder Möbelanwendungen, unter Verwendung eines Halbzeugs (1) hergestellt nach dem Verfahren nach einem der Ansprüche 1 bis 4, wobei die Druckpapierschicht (4) mittels eines digitalen Druckverfahrens, insbesondere eines Tintenstrahldruckverfahrens, erst nach dem Verpressen bedruckt wird.

6. Verfahren nach Anspruch 5. **dadurch gekennzeichnet, dass** als Druckfarbe lösemittelhaltige und/oder wasserhaltige Tinte verwendet wird.

7. Verfahren nach Anspruch 5 oder 6, **dadurch gekennzeichnet, dass** eine auf die Druckpapierschicht (4) aufgebrachte Farbschicht (12) während und/oder nach dem Bedrucken getrocknet wird und/oder dass die Druckpapierschicht (4) vor dem Bedrucken über Umgebungstemperatur erwärmt wird.

8. Verfahren nach Aspruch 7, **dadurch gekennzeichnet, dass** die Trocknung und/oder Erwärmung bei einer Temperatur unterhalb der Reaktivierungstemperatur des Harzes und insbesondere im Bereich zwischen 40 °C und 150 °C erfolgt.

9. Verfahren nach Anspruch 5 bis 8, **dadurch gekennzeichnet, dass** auf die Farbschicht (12) nach dem Bedrucken eine Schutzschicht (14) aufgebracht wird, wobei die Schutzschicht (14) auflackiert wird oder die Schutzschicht (14) insbesondere im Kurztaktpreßverfahren verpreßt wird.

## Claims

1. Method for the production of a planar, printable semi-finished product (1) for a planar building component (2), in particular for floor, wall, ceiling and/or furniture applications, wherein a printable printing paper layer (4) is pressed with a planar basic body (3) under the influence of pressure and heat, wherein, before pressing, a resin-treated under layer (5) is disposed on the basic body (3), which layer is situated between the basic body (3) and the printing paper layer (4), and wherein the under layer (5), together with the printing paper layer (4), is pressed together with the basic body (3),
**characterized in that**
the printing paper layer (4) is unprinted and resin-untreated and that the under layer (5) is made as a completely or partially resinated paper layer.

2. Method according to claim 1, **characterized in that** the amount of resin of the under layer (5) is selected such that after pressing a complete resination or a defined partial resination of the printing paper layer (4) is achieved, wherein the upper side (10) of the printing paper layer (4) remains at least substantially resin-free.

3. Method according to claim 1 or 2, **characterized in that** such a printing paper layer (4) is applied wherein on the upper side (10) thereof a separate ink absorption layer (11) is provided, which is disposed on the paper layer (4) and serves as a carrier for an ink layer (12).

4. Method according to any of the preceding claims, **characterized in that** the upper side (10) of the printing paper layer (4), after pressing and before printing, is mechanically smoothed, polished and/or in particular finely roughened.

5. Method for producing a planar printed building component (2), in particular for floor, wall, ceiling and/or furniture applications, with the use of a semi-finished product (1) manufactured in accordance with the method of any of the claims 1 to 4, wherein the printing paper layer (4) is printed by means of a digital printing method, in particular an inkjet printing method, only after pressing.

6. Method according to claim 5, **characterized in that** solvent-containing and/or water- containing ink is used as a printing ink.

7. Method according to claim 5 or 6, **characterized in that** an ink layer (12) provided on the printing paper layer (4) is dried during and/or after printing and/or that the printing paper layer (4) is heated above ambient temperature before being printed.

8. Method according to claim 7, **characterized in that** the drying and/or heating is performed at a temperature below the reactivation temperature of the resin and in particular in the range between 40°C and 150°C.

9. Method according to claim 5 to 8, **characterized in that** after printing, a protective layer (14) is disposed on the ink layer (12), wherein the protective layer (14) is lacquered on or the protective layer (14) is pressed on in particular in the short-cycle pressing process.

## Revendications

1. Procédé pour la fabrication d'un produit semi-fini plat imprimable (1) pour un élément de construction plat (2), en particulier pour des applications de sols, de murs, de plafonds et/ou de mobilier, dans lequel on comprime une couche de papier d'impression imprimable (4) avec un corps de base plat (3) sous l'effet de la pression et de la chaleur, une sous-couche résinifiée étant disposée sur le corps de base (3) avant la compression, ladite sous-couche se trouvant entre le corps de base (3) et la couche de papier d'impression et la sous-couche (5) étant comprimée, conjointement avec la couche de papier d'impression (4), avec le corps de base (3), **caractérisé en ce que** la couche de papier d'impression (4) est non résinifiée et exempte d'impression, et **en ce que** la sous-couche (5) est réalisée sous la forme d'une couche de papier complètement ou partiellement résinifiée.

2. Procédé selon la revendication 1, **caractérisé en ce que** la fraction de résine de la sous-couche (5) est sélectionnée de telle sorte que l'on obtient après la compression une résinification complète ou une résinification partielle définie de la couche de papier d'impression (4), le côté supérieur (10) de la couche de papier d'impression (4) restant exempt de résine au moins de manière essentielle.

3. Procédé selon la revendication 1 ou 2, **caractérisé en ce qu'**on utilise une couche de papier d'impression (4) sur le côté supérieur (10) de laquelle on prévoit une couche séparée de réception de couleur, venant s'appliquer sur la couche de papier (4), qui fait office de support d'une couche colorée (12).

4. Procédé selon l'une quelconque des revendications précédentes, **caractérisé en ce que** le côté supérieur (10) de la couche de papier la pression (4) fait l'objet, après la compression et avant l'impression, d'un lissage mécanique, d'un ponçage mécanique et/ou d'un traitement pour lui conférer une rugosité en particulier fine.

5. Procédé pour la fabrication d'un élément de construction imprimé plat (2) en particulier pour des applications de sols, de murs, de plafonds et/ou de mobilier, en utilisant un produit semi-fini (1) fabriqué conformément au procédé selon l'une quelconque des revendications 1 à 4, dans lequel la couche de papier d'impression (4) n'est imprimée au moyen d'un procédé d'impression numérique, en particulier d'un procédé d'impression par jet d'encre, qu'après la compression.

6. Procédé selon la revendication 5, **caractérisé en ce qu'**on utilise à titre d'encre d'impression, une encre contenant du solvant et/ou une encre contenant de l'eau.

7. Procédé selon la revendication 5 ou 6, **caractérisé en ce qu'**on sèche une couche colorée (12) appliquée sur la couche de papier d'impression (4) pendant et/ou après l'impression et/ou **en ce qu'**on chauffe le couche de papier d'impression (4) avant l'impression jusqu'à une température supérieure à la température ambiante.

8. Procédé selon la revendication 7, **caractérisé en ce que** le séchage et/ou le chauffage a lieu à une température inférieure à la température de réactivation de la résine et en particulier dans la plage de 40 °C à 150 °C.

9. Procédé selon les revendications 5 à 8, **caractérisé en ce qu'**on applique sur la couche colorée (12), après l'impression, une couche de protection (14), la couche de protection (14) étant appliquée par laquage ou bien la couche de protection (14) étant comprimée en particulier dans le procédé d'impression à cycle court.
